# EUROPÄISCHE PATENTSCHRIFT

(11) **EP 2 396 196 B1**
(45) Veröffentlichungstag und Bekanntmachung des Hinweises auf die Patenterteilung: **14.03.2018**
(21) Anmeldenummer: 10706483.4
(22) Anmeldetag: 22.01.2010
(51) Int. Cl.: B60R 1/00, B60R 11/04

(54) **VORRICHTUNG MIT EINER KAMERAEINHEIT ZUR BILDERFASSUNG DES AUSSENBEREICHES EINES KRAFTFAHRZEUGS**
DEVICE HAVING A CAMERA UNIT FOR CAPTURING IMAGES OF THE EXTERIOR OF A MOTOR VEHICLE
DISPOSITIF MUNI D'UN ENSEMBLE APPAREIL PHOTO POUR SAISIR DES IMAGES DE LA ZONE EXTÉRIEURE D'UN VÉHICULE AUTOMOBILE

(30) Priorität: 10.02.2009 DE 102009008281
(43) Veröffentlichungstag der Anmeldung: 21.12.2011
(73) Patentinhaber: Huf Hülsbeck & Fürst GmbH & Co. KG, 42551 Velbert (DE)
(72) Erfinder: SCHÜTZ, Heiko, 42549 Velbert (DE); WEIKERT, Günther, 71134 Aidlingen (DE)
(86) Internationale Anmeldenummer: PCT/DE2010/000066
(87) Internationale Veröffentlichungsnummer: WO 2010/091657

(56) Entgegenhaltungen:
- WO-A1-2010/029109
- DE-A1-102006 039 192
- DE-A1-102006 048 373
- DE-A1-102007 005 322

## Beschreibung

Die vorliegende Erfindung richtet sich auf eine Vorrichtung mit einer Kameraeinheit gemäß dem Oberbegriff von Anspruch 1, die zur Bilderfassung des Außenbereiches eines Kraftfahrzeugs dient, mit einer Kamera, die in einem Gehäuse der Kameraeinheit zwischen einer Rückzugstellung und einer Bilderfassungsstellung beweglich aufgenommen ist, und mit einem Deckelelement, das zwischen einer Schließstellung und einer Öffnungsstellung relativ zum Gehäuse beweglich ist, wobei die Bewegung der Kamera und die Bewegung des Deckelelementes durch eine Antriebseinheit erzeugbar ist.

Vorrichtungen mit einer Kameraeinheit, die zur Bilderfassung des Außenbereiches eines Kraftfahrzeugs dienen, sind aus dem Stand der Technik bereits bekannt. Derartige Vorrichtungen umfassen eine Kamera, die in einem Gehäuse der Kameraeinheit zwischen einer Rückzugstellung und einer Bilderfassungsstellung beweglich aufgenommen ist. Beispielsweise können derartige Kameraeinheiten im Bereich des assistierten Einparkens von Kraftfahrzeugen zum Einsatz kommen. Wird beispielsweise der Rückwärtsgang des Kraftfahrzeugs eingelegt, verfährt die Kamera von der Rückzugstellung in die Bilderfassungsstellung, wobei die Kamera wenigstens teilweise aus dem Gehäuse herausgefahren wird. Dadurch wird der Bereich hinter dem Kraftfahrzeug durch die Kamera bildlich erfasst und auf einem Display für den Fahrer des Kraftfahrzeugs angezeigt. Ist die Rückwärtsfahrt beendet und nimmt der Fahrer des Kraftfahrzeugs den Rückwärtsgang wieder heraus, kann die Kamera von der Bilderfassungsstellung wieder zurück in die Rückzugstellung verschwenken.

Um die Kamera zumindest in der Rückzugsstellung vor Verunreinigungen zu schützen, ist ein Deckelelement vorgesehen, durch welches die Öffnung, durch die die Kamera aus dem Gehäuse der Kameraeinheit herausfährt, in der Rückzugstellung verschlossen werden kann. Folglich muss beim Übergang von der Rückzugstellung in die Bilderfassungsstellung der Kamera das Deckelelement zugleich zwischen einer Schließstellung und einer Öffnungsstellung bewegt werden.

In der DE 60 2004 003 255 T2 ist eine Kameraeinheit offenbart, die als Einparkhilfe für den Fahrer eines Kraftfahrzeugs dient. Die Kameraeinheit weist ein Deckelelement auf, welches von einer Schließstellung in eine Öffnungsstellung und umgekehrt bewegbar ist. Die Ansteuerung des Deckelelementes sowie die Ansteuerung der Kameraeinheit weist jedoch einen komplexen Aufbau mit einer Vielzahl von einzelnen Elementen auf.

Aus der deutschen Patentanmeldung mit dem Aktenzeichen 10 2007 052 402.3 ist eine weitere Vorrichtung mit einer Kameraeinheit offenbart, die zur Bilderfassung des Außenbereiches eines Kraftfahrzeugs dient. Die Bewegung des hierin offenbarten Deckelelementes relativ zur Kamera umfasst mehrere Bewegungsschritte, so dass eine komplexe kinematische Ansteuerung des Deckelelementes erforderlich ist. Insbesondere muss eine Linearbewegung der Kamera mit einer Hub-Schwenkbewegung des Deckelelementes kombiniert werden. Ferner erfordert die hierin offenbarte Vorrichtung zur Bewegung der Kamera und des Deckelelementes einen erheblichen Bauraum.

Aus der gattungsbildenden DE102006048373A1 ist eine Kameraeinheit bekannt, die zur Bilderfassung des Außenbereiches eines Kraftfahrzeugs dient, mit einer Kamera, die in einem Gehäuse der Kameraeinheit zwischen einer Rückzugstellung und einer Bilderfassungsstellung beweglich aufgenommen ist, und mit einem Deckelelement, das zwischen einer Schließstellung und einer Öffnungsstellung relativ zum Gehäuse beweglich ist, wobei die Bewegung der Kamera und die Bewegung des Deckelelementes durch eine Antriebseinheit erzeugbar ist, wobei eine Führungskulisse zur Führung der Bewegung der Kamera zwischen der Rückzugstellung und der Bilderfassungsstellung vorgesehen ist.

Die DE102007005322A1 offenbart ein Umfelderkennungssystem für Kraftfahrzeuge mit einem im Bereich einer Sichtfläche des Kraftfahrzeugs angeordneten Sensor, wobei der Sensor beweglich gelagert ist.

Es ist daher die Aufgabe der vorliegenden Erfindung, eine Vorrichtung mit einer Kameraeinheit zur Bilderfassung des Außenbereiches eines Kraftfahrzeugs zu schaffen, die die Nachteile des voranstehend genannten Standes der Technik überwindet und über einen einfachen und robusten sowie zuverlässigen Aufbau verfügt. Ebenfalls soll eine einfache Erzeugung der Bewegung sowohl der Kamera als auch des Deckelelementes ermöglicht werden.

Diese Aufgabe wird ausgehend von einer Vorrichtung mit einer Kameraeinheit zur Bilderfassung des Außenbereiches eines Kraftfahrzeugs gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens eine erste Führungskulisse zur Führung der Bewegung der Kamera zwischen der Rückzugstellung und der Bilderfassungsstellung und wenigstens eine zweite Führungskulisse zur Führung der Bewegung des Deckelelementes zwischen der Schließstellung und der Öffnungsstellung vorgesehen ist, so dass eine Relativbewegung der Kamera zum Deckelelement ermöglicht wird. Somit ist ein einfacher und solider Aufbau der Vorrichtung gewährleistet.

Die Erfindung geht von dem Gedanken aus, basierend auf einer Antriebseinheit, die sowohl zum Antrieb der Bewegung der Kamera als auch zum Antrieb der Bewegung des Deckelelementes dient, zwei Bewegungen kinematisch getrennt voneinander zu erzeugen. Die geometrische Ausgestaltung der ersten Führungskulisse kann dabei unabhängig von der geometrischen Ausgestaltung der zweiten Führungskulisse erfolgen. Vorzugsweise sind Beginn und Ende der jeweiligen Bewegung sowohl der Kamera als auch des Deckelelementes gleich, und die Bewegungskinematik ist durch die jeweilige Führungskulisse bestimmt. Folglich besteht die Möglichkeit, die Führungskulissen derart auszugestalten, dass eine Kollision der Kamera mit dem Deckelelement vermieden werden kann. Insbesondere kann das Deckelelement in seiner Bewegung von der Schließstellung in die Öffnungsstellung der Bewegung der Kamera von der Rückzugstellung in die Bilderfassungsstellung voreilen. Dadurch wird erreicht, dass die Linse der Kamera nicht in Kontakt mit dem Deckelelement gelangen kann, um eine Beschädigung dieser zu vermeiden.

Weiterführend ergibt sich der Vorteil, dass die Führungskulisse sowohl für die Führung der Bewegung der Kamera als auch für die Führung der Bewegung des Deckelelementes derart optimiert werden kann, dass ein minimaler Bewegungsraum der Kamera und des Deckelelementes erforderlich wird. In Abhängigkeit der zweiten Führungskulisse kann die Führung der Bewegung des Deckelelementes so gestaltet sein, dass das Deckelelement eine Hub-Schwenkbewegung ausführt, ohne hierfür einen zusätzlichen Bewegungsraum zu erfordern. Insbesondere dann, wenn die Vorrichtung mit der Kameraeinheit im Bereich der Heckklappe eines Kraftfahrzeugs eingebaut ist, ist der Hub-Schwenkbereich des Deckelelementes durch umliegende Bauteile begrenzt, beispielsweise durch das Kennzeichenschild des Kraftfahrzeugs oder die angrenzende Verkleidung mit der Beleuchtung des Kennzeichenschilds, begrenzt.

Ein weiterer Vorteil ist darin zu erkennen, dass zur Führung eines Elementes in einer Führungskulisse lediglich eine weitere Verbindungsstelle des jeweils zu führenden Elementes, vorliegend der Kamera und/oder dem Deckelelement, erforderlich ist. Mit lediglich zwei Anknüpfungspunkten ist bereits das geführte Element in seiner Lage innerhalb der Vorrichtung definiert. Folglich kann eine einfache Anlenkung sowohl der Kamera als auch des Deckelelementes umgesetzt werden, um gemeinsam mit den jeweiligen Führungskulissen die Bewegung der Kamera und des Deckelelementes definiert zu führen.

Es ist von besonderem Vorteil, dass wenigstens die erste Führungskulisse und/oder wenigstens die zweite Führungskulisse im Gehäuse der Kameraeinheit eingebracht ist. Das Gehäuse der Kameraeinheit kann die Bewegungsmechanik der Kamera und des Deckelelementes vollständig umschließen, wobei das Gehäuse vorliegend auch als offen gestaltetes Gehäuse, beispielsweise in Gestalt eines Rahmens, bestehend aus mehreren Stegen und Halteelementen, ausgeführt sein kann. Das vorliegend bezeichnete Gehäuse bedeutet dabei nicht zwingend ein vollständiges Umschließen der an der Kameraeinheit beteiligten Komponenten. Folglich können lediglich zwei Gehäusewandungen vorgesehen sein, die sich vorzugsweise in zwei sich planparallel beabstandet gegenüberliegenden Ebenen erstrecken. Die erste und/oder die zweite Führungskulisse können in jeder der Gehäusewandungen eingebracht sein. Dadurch entsteht eine hohe Stabilität der Führung der Bewegung sowohl der Kamera als auch des Deckelelementes, da insbesondere eine Verkippen oder Verkanten der Kamera und des Deckelelementes innerhalb des Gehäuses vermieden wird.

Weiterhin ist es von Vorteil, dass die Wirkverbindung zwischen der Antriebseinheit und der Kamera und die Wirkverbindung zwischen der Antriebseinheit und dem Deckelelement ein gemeinsames Hebelelement umfassen. Durch das gemeinsame Hebelelement wird erreicht, dass die Antriebseinheit sowohl mit der Kamera als auch mit dem Deckelelement auf einfache Weise verbunden werden kann. Das Hebelelement beschreibt dabei ein Element, das durch die Antriebseinheit angelenkt werden kann, um eine Bewegung, vorzugsweise eine Schwenkbewegung um eine Drehachse, auszuführen. Weiterhin ist sowohl die Kamera als auch das Deckelelement mit dem Hebelelement wirkverbunden, so dass die genannte Schwenkbewegung zur Ausführung der Bewegung der Kamera und der Bewegung des Deckelelementes umgesetzt werden kann.

Nach einer weiteren Ausführungsform ist das Hebelelement innerhalb des Gehäuses in einer Drehachse drehbar aufgenommen, wobei die Kamera mit dem Hebelelement in einer ersten Verbindungsachse vorzugsweise gelenkig verbunden ist und wobei das Deckelelement mit dem Hebelelement in einer zweiten Verbindungsachse ebenfalls vorzugsweise gelenkig verbunden ist. Die Verbindungsachsen zwischen dem Hebelelement und der Kamera sowie dem Deckelelement können Drehbolzen umfassen, wobei die Verbindungsachsen auch als Filmgelenk oder dergleichen ausgeführt sein können.

Wird das Hebelelement durch die Antriebseinheit verschwenkt, wandert sowohl die erste Verbindungsachse als auch die zweite Verbindungsachse auf einer Kreisbahn um die Drehachse des Hebelelementes herum. Sowohl die erste Führungskulisse als auch die zweite Führungskulisse ist derart angeordnet, dass bei Verschwenken der Verbindungsachsen um die Drehachse durch Verschwenken des Hebelelementes sowohl die Kamera zwischen der Rückzugstellung und der Bilderfassungsstellung als auch das Deckelelement zwischen der Schließstellung und der Öffnungsstellung verfahren wird. Die Verbindungsachsen sind zwar auf der Kreisbahn um die Drehachse zwangsgeführt, durch die freie geometrische Gestaltung der ersten und der zweiten Führungskulisse können jedoch die Bewegungen sowohl der Kamera als auch des Deckelelementes entsprechend optimiert werden, um zwischen ihren Stellungen einen minimalen Bewegungsraum zu benötigen.

Die Kamera kann in der Rückzugstellung weiter in das Gehäuse hinein gefahren sein, so dass bei Beginn der Schwenkbewegung des Hebelelementes um die Drehachse das Deckelelement der Bewegung der Kamera voreilt. Folglich wird zuerst die Öffnung im Gehäuse durch das Deckelelement freigegeben, bevor die Kamera durch die Öffnung hindurchtritt. Das Hebelelement muss nicht zwangsläufig als gerades Hebelelement ausgeführt sein, so dass die erste Verbindungsachse, die zweite Verbindungsachse sowie die Drehachse nicht zwingend auf einer gemeinsamen Geraden angeordnet sein müssen und auch ein Dreieck aufspannen können.

Nach einer weiterführenden Ausführungsform kann der Abstand zwischen der ersten Verbindungsachse und der Drehachse größer sein als der Abstand zwischen der zweiten Verbindungsachse und der Drehachse. Folglich befindet sich die erste Verbindungsachse am distalen Ende des Hebelelementes und weist einen großen Abstand zur Drehachse auf. Die zweite Verbindungsachse befindet sich etwa auf der Strecke zwischen dem distalen Ende des Hebelelementes und der Drehachse. Durch den kleineren Bahnradius der Bewegungsbahn der zweiten Verbindungsachse führt diese eine kleinere Bewegung aus als die Bewegung der ersten Verbindungsachse. Insbesondere durch die relative Anordnung der ersten und zweiten Führungskulisse relativ zur Anordnung der ersten und zweiten Verbindungsachse kann sowohl die Bewegung der Kamera als auch die Bewegung des Deckelelementes aus einer Hub-Schwenkbewegung kombiniert ausgeführt sein.

Im Rahmen der vorliegenden Erfindung kann der Abstand zwischen der ersten Verbindungsachse und der Drehachse auch kleiner sein als der Abstand zwischen der zweiten Verbindungsachse und der Drehachse. Daraus folgt, dass die Bewegung der ersten Verbindungsachse zur Anlenkung der Kamera auch kleiner ausfallen kann als die Bewegung der zweiten Verbindungsachse zur Bewegung des Deckelelementes.

Es ist von besonderem Vorteil, wenn an der Kamera wenigstens ein erstes Gleitelement angeordnet ist, das innerhalb der Führungskulisse geführt ist und zur Führung der Kamera dient, so dass die Lage der Kamera durch die Position des ersten Gleitelementes in der ersten Führungskulisse und durch die Position der ersten Verbindungsachse bestimmt ist.

Weiterführend kann vorgesehen sein, dass am Deckelelement wenigstens ein zweites Gleitelement angeordnet ist, das innerhalb der zweiten Führungskulisse geführt ist und zur Führung des Deckelelementes dient, so dass die Lage des Deckelelementes durch die Position des zweiten Gleitelementes in der zweiten Führungskulisse und durch die Position der zweiten Verbindungsachse bestimmt ist. Sowohl das erste als auch das zweite Gleitelement können in Gestalt eines so genannten Gleitsteins ausgeführt sein, der in der Kulissenführung geführt wird. Sowohl das erste Gleitelement als auch das zweite Gleitelement kann zweifach vorhanden sein, so dass sowohl die ersten Gleitelemente als auch die zweiten Gleitelemente jeweils in zwei planparallel beabstandet zueinander angeordnete Gehäusewandungen in entsprechend vorhandene Führungskulissen geführt werden. Folglich ist sowohl die Kamera als auch das Deckelelement an jeweils vier Aufnahmepunkten innerhalb des Gehäuses der Kameraeinheit aufgenommen. Die vier Befestigungspunkte werden durch jeweils zwei Gleitelemente und jeweils zwei Verbindungspunkte an den jeweiligen Verbindungsachsen gebildet.

Nach einer weiteren vorteilhaften Ausführungsform weist das Deckelelement wenigstens ein Führungselement auf, an dem das zweite Gleitelement angeordnet ist, wobei sich das Führungselement vorzugsweise etwa orthogonal aus einer Ebene des Deckelelementes heraus erstreckt, die durch den Bereich des Deckelelementes gebildet ist, der gegen des Gehäuse verschließend zur Anlage bringbar ist. Am Deckelelement können vorzugsweise zwei Führungselemente in Form von Anformungen vorhanden sein, die einteilig mit dem Deckelelement ausgeführt sind. Im Ergebnis bilden die Führungselemente eine Gabelform des Deckelementes, wobei an den Endseiten der Gabeln distal zum Deckelelement die jeweiligen zweiten Gleitelemente angeordnet sind, um in den zweiten Führungskulissen innerhalb der jeweiligen Gehäusewandung geführt zu werden.

Nach einer weiteren vorteilhaften Ausgestaltung der erfindungsgemäßen Vorrichtung ist ein Anlenkelement außenseitig am Gehäuse angeordnet, das in der Drehachse drehübertragend mit dem Hebelelement verbunden ist, derart, dass bei einem Anlenken des Anlenkelementes durch die Antriebseinheit eine Drehung des Hebelelementes um die Drehachse erzeugt werden kann. Die Anlenkung des Anlenkelementes durch die Antriebseinheit kann beispielsweise durch ein Hubelement erfolgen, das aus der Antriebseinheit herausfahrbar ist. Das Hubelement ist gelenkig am Anlenkelement angebracht, um dieses um die Drehachse zu verschwenken. Das Anlenkelement außerhalb des Gehäuses und das Hebelelement innerhalb des Gehäuses können über die Drehachse auch einteilig ausgeführt sein, wobei die Anlenkung des Hebelelementes grundsätzlich auch durch eine direkte Verbindung der Antriebseinheit mit dem Hebelelement ermöglicht werden kann, beispielsweise derart, dass das Hubelement gelenkig mit dem Hebelelement verbunden ist.

Das Gehäuse der Kameraeinheit kann eine entsprechend gestaltete Öffnung aufweisen, aus der die Kamera in der Bilderfassungsstellung aus dem Gehäuse wenigstens teilweise herausfahrbar ist und gegen die das Dichtelement in der Schließstellung dichtend zur Anlage bringbar ist, wobei insbesondere zwischen der Öffnung und dem Deckelelement ein Dichtelement angeordnet sein kann. Das Dichtelement kann als Ringdichtung umlaufend am Rand der Öffnung vorhanden sein, so dass das Deckelelement in der Schließstellung dichtend gegen das Dichtelement gedrückt werden kann. Das Dichtelement kann jedoch auch am Deckelelement vorhanden sein, so dass dieses mit dem Deckelelement mitbewegt wird.

Gemäß einer vorteilhaften Ausgestaltung der Antriebseinheit kann diese als elektromechanische Antriebseinheit mit einer Selbsthemmung ausgeführt sein, derart, dass eine Bewegung des Hebelelementes ausschließlich durch den Betrieb der Antriebseinheit ermöglicht wird. Durch die selbsthemmende Wirkung der Antriebseinheit kann das Deckelelement von der Außenseite des Gehäuses der Kameraeinheit nicht gewaltsam geöffnet werden. In der Rückzugstellung der Kamera bzw. in der Schließstellung des Deckelelementes kann die Antriebseinheit eine Position des Hebelelementes bewirken, durch die das Deckelelement mit einer vorbestimmten Dichtkraft gegen das Dichtelement gedrückt wird. Die Selbsthemmung in der elektromechanischen Antriebseinheit kann durch ein Getriebe gebildet werden, das eine Bewegung des Hubelementes von der Außenseite unterbindet. Dabei kann die Getriebeeinheit insbesondere ein Schneckenradgetriebe umfassen, das dem Fachmann als selbsthemmende Getriebestufe bekannt ist.

Nach einer weiteren vorteilhaften Ausführungsform kann wenigstens eine der Kulissenführungen derart ausgestaltet sein, dass eine Bewegung der Kamera und/oder des Deckelelementes ausschließlich durch eine Bewegung des Hebelelementes ermöglicht wird, um eine Selbsthemmung der Bewegung der Kamera und/oder des Deckelementes zu schaffen. Die Führungskulissen können Raststellungen besitzen, die in der Rückzugstellung der Kamera bzw. in der Schließstellung des Deckelelementes ein Öffnen des Deckelelementes von der Außenseite unmöglich machen.

Nach einer möglichen vorteilhaften Ausführungsform der Antriebseinheit kann diese als Drehmotor und/oder als ein Zentralverriegelungssteller ausgeführt sein. Ist die Antriebseinheit als ein Zentralverriegelungssteller ausgeführt, kann diese vorzugsweise auch zur Betätigung einer Zentralverriegelung eines Kraftfahrzeugs Verwendung finden. Dabei entsteht der Vorteil, dass lediglich ein Zentralverriegelungssteller erforderlich ist, um beispielsweise die Verriegelung einer Heckklappe eines Kraftfahrzeugs zu verriegeln oder zu entriegeln. Durch einfache mechanische Komponenten, beispielsweise durch eine mechanische Schaltweiche, kann die Funktion des Zentralverriegelungsstellers zur Ansteuerung der Verriegelung der Heckklappe umgestellt werden auf die Funktion als Antriebseinheit für eine Kameraeinheit gemäß der vorliegenden Erfindung. Die Vorrichtung kann folglich neben einer Kameraeinheit auch eine Zentralverriegelungseinheit zur Verriegelung vorzugsweise einer Heckklappe eines Kraftfahrzeugs umfassen.

Umfasst die Vorrichtung eine Betätigungseinheit zur Öffnungs- und Schließbetätigung einer Klappe an einem Kraftfahrzeug, so kann die Betätigungseinheit wenigstens ein manuell bedienbares Betätigungselement aufweisen. Nach einer vorteilhaften Weiterführung der erfindungsgemäßen Vorrichtung kann das Deckelelement derart ausgeführt sein, dass dieses in der Schließstellung das Betätigungselement in Richtung zur Außenseite des Kraftfahrzeugs abdeckt. Dies kann insbesondere dann von Vorteil sein, wenn das Betätigungselement vor Verunreinigung geschützt werden soll, was durch das abdeckende Deckelement erreicht wird. Wird das Betätigungselement manuell bedient, kann beispielsweise das Deckelelement durch die Betätigung der Kameraeinheit von dem Betätigungselement entfernt werden, so dass dieses manuell erreichbar wird. Das Erfordernis, das Deckelelement von dem Betätigungselement zu entfernen, kann beispielsweise durch eine Optik detektiert werden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine geschnittene Seitenansicht eines Ausführungsbeispiels der Vorrichtung, wobei sich das Deckelelement in einer Schließstellung befindet,
- Figur 2: die geschnittene Ansicht des Ausführungsbeispiels der Vorrichtung gemäß Figur 1, wobei sich das Deckelelement in der Öffnungsstellung befindet und die Kamera aus dem Gehäuse der Kameraeinheit ausgefahren ist,
- Figur 3: eine weitere Seitenansicht eines Ausführungsbeispiels der erfindungsgemäßen Vorrichtung, wobei die Anlenkung des Hebelelementes über die Antriebseinheit dargestellt ist, und wobei sich das Deckelelement in der Schließstellung befindet,
- Figur 4: die Seitenansicht des Ausführungsbeispiels der Vorrichtung gemäß Figur 3, wobei sich das Deckelelement in der Öffnungsstellung befindet und die Kamera aus dem Gehäuse der Kameraeinheit ausgefahren ist,
- Figur 5: eine perspektivische Ansicht des Ausführungsbeispiels der Vorrichtung in der Schließstellung des Deckelelements und
- Figur 6: eine Explosionsdarstellung eines Ausführungsbeispiels der Vorrichtung, umfassend eine Kameraeinheit und eine Betätigungseinheit.

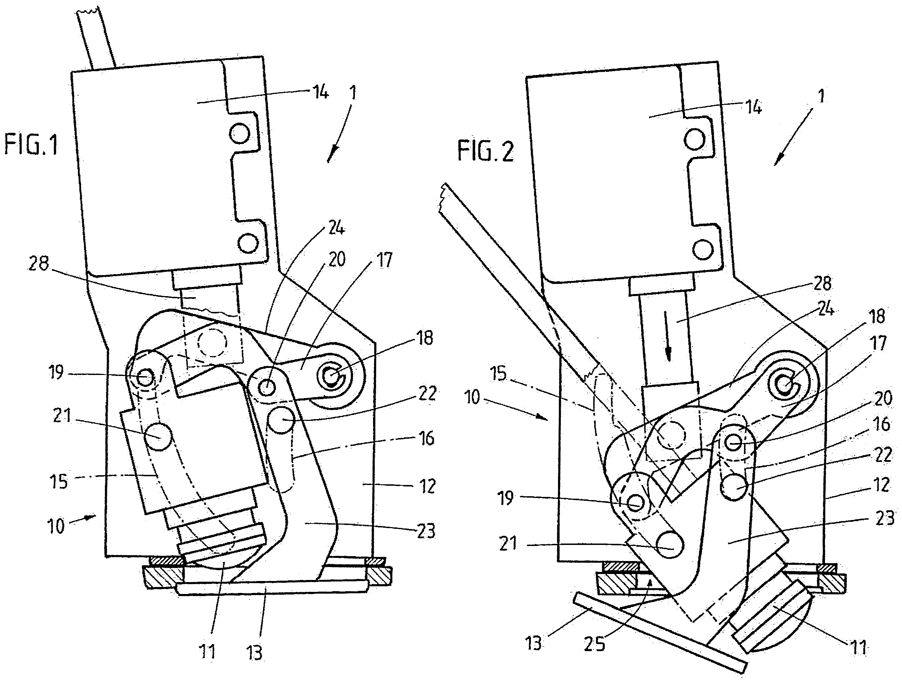

Die Figuren 1 und 2 zeigen ein Ausführungsbeispiel der erfindungsgemäßen Vorrichtung 1, wobei die Kameraeinheit 10 der Vorrichtung 1 dargestellt ist. Die Vorrichtung 1 mit der Kameraeinheit 10 dient zur Bilderfassung des Außenbereiches eines Kraftfahrzeugs, und kann vorzugsweise in der Heckklappe eines Kraftfahrzeugs integriert werden. Die Bilderfassung kann als Einparkhilfe dienen, wenn der Bereich hinter dem Kraftfahrzeug durch die Kameraeinheit 10 erfasst wird, um das erfasste Bild vorzugsweise über ein Display im Sichtbereich des Fahrers des Kraftfahrzeugs abzubilden.

Die Kameraeinheit 10 umfasst eine Kamera 11, die zwischen einer Rückzugstellung und einer Bilderfassungsstellung beweglich ist. Befindet sich die Kamera 11 in der Rückzugstellung, siehe hierzu Figur 1, so ist die Kamera 11 in das Gehäuse 12 der Kameraeinheit 10 zurückgezogen. Wird die Kamera 11 in die Bilderfassungsstellung überführt, siehe hierzu Figur 2, wird diese aus einer Öffnung 25 des Gehäuses 12 aus diesem herausgefahren.

Um die Kamera 11 in der Rückzugstellung vor Verunreinigungen und Beschädigung zu schützen, ist ein Deckelelement 13 ebenfalls beweglich im Gehäuse 12 aufgenommen, das die Öffnung 25 in der Rückzustellung (Figur 1) verschließt und in der Bilderfassungsstellung (Figur 2) der Kamera freigibt. Sowohl die Bewegung der Kamera 11 als auch die Bewegung des Deckelelementes 13 wird durch eine Antriebseinheit 14 erzeugt, wobei die Erzeugung der jeweiligen Bewegung anhand der Figuren 1 und 2 gemeinsam im Folgenden beschrieben wird.

Zur Führung der Bewegung der Kamera 11 ist im Gehäuse 12 der Kameraeinheit 10 eine erste Führungskulisse 15 eingebracht. Zur Führung der Bewegung des Deckelelementes 13 ist im Gehäuse 12 ferner eine zweite Führungskulisse 16 eingebracht, wobei in der ersten Führungskulisse 15 ein erstes Gleitelement 21 geführt ist, und wobei in der zweiten Führungskulisse 16 ein zweites Gleitelement 22 geführt ist. Das erste Gleitelement 21 ist dabei an der Kamera 11 angeordnet, wohingegen das zweite Gleitelement 22 an einem Führungselement 23 angeordnet ist, das Bestandteil des Deckelelementes 13 ist.

Das Deckelelement 13 weist ein Grundteil auf, das zur dichtenden Anlage in der Öffnung 25 des Gehäuses 12 dichtend eingebracht werden kann. Der Grundteil erstreckt sich in einer Ebene, wobei ein Führungselement 23 gezeigt ist, das sich orthogonal aus dem Grundteil des Deckelelementes 13 heraus erstreckt. Folglich entsteht eine Gabelform des Deckelelementes 13, das über die zweifach vorhandene Führungselemente 23 (in Figur 1 und 2 nur vorderseitig einfach erkennbar) im Gehäuse 12 geführt wird. Das zweite Gleitelement 22 ist folglich am Führungselement 23 des Deckelelementes 13 angeordnet. Im Gehäuse 12 der Kameraeinheit 10 ist ein Hebelelement 17 um eine Drehachse 18 schwenkbar aufgenommen. Die Anlenkung des Hebelelementes 17 erfolgt durch ein Hubelement 28, das als Teil der Antriebseinheit 14 aus dieser heraus fahrbar ist. Weiterhin ist am Hebelelement 17 die Kamera 11 in einer ersten Verbindungsachse 19 angeordnet, wobei das Deckelelement 13 über eine zweite Verbindungsachse 20 am Hebelelement 17 angeordnet ist. Dabei ist der Abstand zwischen der ersten Verbindungsachse 19 und der Drehachse 18 größer als der Abstand zwischen der zweiten Verbindungsachse 20 und der Drehachse 18.

Wird die Kamera 11 von der Rückzugstellung in die Bilderfassungsstellung überführt, und wird zugleich das Deckelelement 13 von der Schließstellung in die Öffnungsstellung überführt, so wird das Hebelelement 17 gegen den Uhrzeigersinn um die Drehachse 18 verschwenkt. Dies erfolgt durch einen Hub des Hubelementes 28, das aus der Antriebseinheit 14 herausgefahren wird, wobei das Hubelement 28 am Anlenkelement 24 angreift, das ebenfalls in der Drehachse 18 drehbar gelagert ist und das mit dem Hebelelement 17 drehfest verbunden ist.

Bei Verschwenken des Hebelelementes 17 um die Drehachse 18 gegen den Uhrzeigersinn wandert sowohl die erste Verbindungsachse 19 als auch die zweite Verbindungsachse 20 auf einer Kreisbahn um die Drehachse 18 herum. Da sowohl die Kamera 11 als auch das Deckelelement 13 über die erste und zweite Verbindungsachse 19 und 20 mit dem Hebelelement 17 verbunden ist, werden sowohl das erste Gleitelement 21 in der ersten Führungskulisse 15 als auch das zweite Gleitelement 22 in der zweiten Führungskulisse 16 entlang bewegt. Daraus entsteht eine Zwangsführung sowohl der Kamera 11 als auch des Deckelelementes 13, so dass sowohl die Kamera 11 als auch das Deckelelement 13 eine vorbestimmte Bewegung ausführen.

Die Führung der Kamera erfolgt folglich durch die Bewegung der Verbindungsachse 19 auf einer Kreisbahn um die Drehachse 18 einerseits und der Bewegung des ersten Gleitelements 21 in der ersten Führungskulisse 15 andererseits. Hingegen erfolgt die Führung der Bewegung des Deckelelementes 13 sowohl durch die Bewegung der zweiten Verbindungsachse 20 auf einer Kreisbahn um die Drehachse 18 als auch durch eine Bewegung des zweiten Gleitelementes 22 innerhalb der zweiten Führungskulisse 16.

Die erste Führungskulisse 15 erstreckt sich dabei etwa entlang einer Kreisbahn um die Drehachse 18 herum, so dass die Kamera 11 im Wesentlichen um die Drehachse 18 selbst verschwenkt wird. Die zweite Führungskulisse 16 erstreckt sich im Wesentlichen senkrecht innerhalb des Gehäuses 12 in Richtung zur unterseitig eingebrachten Öffnung 25. Schwenkt die zweite Verbindungsachse 20 um die Drehachse 18 herum, so wandert das zweite Gleitelement 22 im Wesentlichen in der Senkrechten nach unten.

Folglich führt das Deckelelement 13 eine Hub-Schwenkbewegung aus, wobei im ersten Bewegungsabschnitt des Hebelelementes 17 um die Drehachse 18 der Hubanteil des Deckelelementes 13 aus der Öffnung 25 im Gehäuse 12 der Kameraeinheit 10 überwiegt. Erst im nachfolgenden Bewegungsabschnitt bis zur endgültigen Öffnungsstellung des Deckelelementes 13 folgt eine Schwenkbewegung des Deckelelementes 13, so dass dieses aus dem Bewegungsbereich der Kamera herausgeführt ist und eine Kollision zwischen der Kamera 11 und dem Deckelelement 13 vermieden wird. Wird die Kameraeinheit 10 wieder von der Bilderfassungsstellung in die Rückzugstellung überführt, erfolgt eine Verschwenkung des Hebelelementes 17 um die Drehachse 18 im Uhrzeigersinn, was durch ein Einfahren des Hubelementes 28 in die Antriebseinheit 14 hervorgerufen wird.

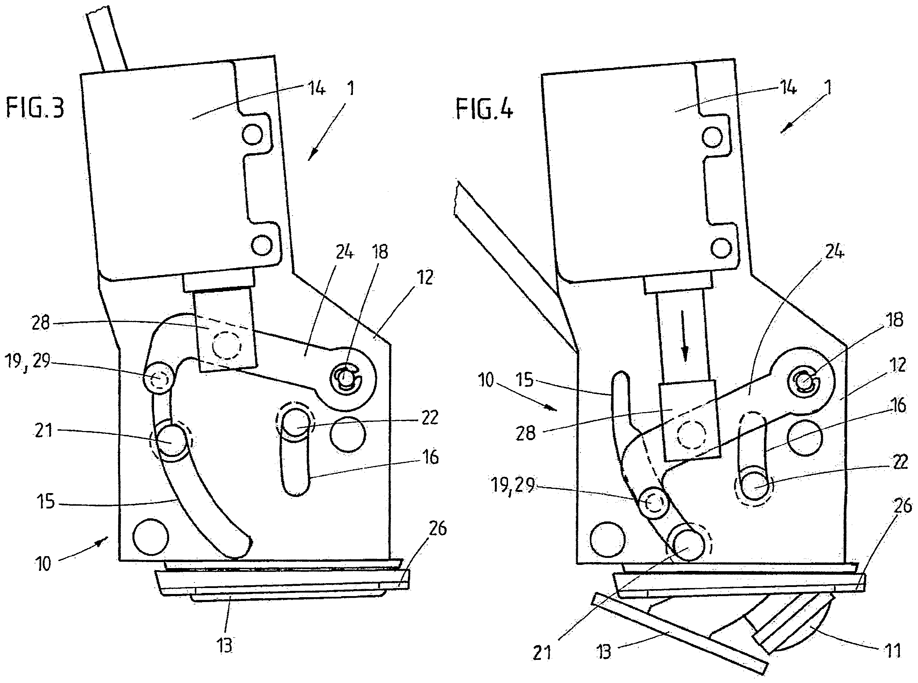

Die Figuren 3 und 4 zeigen das Ausführungsbeispiel der Vorrichtung 1 von einer Außenseite, so dass die Anlenkung des Hebelelementes 17 zur Verschwenkung um die Drehachse 18 verdeutlicht ist. Gemäß Figur 3 befindet sich die Kameraeinheit 10 in der Rückzugstellung, wobei Figur 4 die Kameraeinheit 10 in der Bilderfassungsstellung zeigt. Auf der Drehachse 18 ist ein Anlenkelement 24 angeordnet, so dass das Anlenkelement 24 mit dem Hebelelement 17 - innerhalb des Gehäuses 12 der Kameraeinheit 10 angeordnet - drehfest um die Drehachse 18 verbunden ist.

Die Anlenkung des Anlenkelementes 24 erfolgt durch eine direkte gelenkige Verbindung des Anlenkelementes 24 mit dem Hubelement 28 der Antriebseinheit 14. In Figur 3 ist das Hubelement 28 in der eingefahrenen Stellung gezeigt, so dass sich das Anlenkelement 24 in der Ausgangsstellung befindet. Wird das Hubelement 28 aus der Antriebseinheit 14 herausgefahren, wird zugleich das Anlenkelement 24 gegen den Uhrzeigersinn um die Drehachse 18 herum verschwenkt, um die Kamera 11 und das Deckelelement 13 aus dem Gehäuse heraus zu bewegen.

Die Darstellung zeigt wiederum die erste Führungskulisse 15 zur Führung des ersten Gleitelementes 21, das mit der Kamera 11 verbunden ist. Ferner ist die zweite Führungskulisse 16 gezeigt, in der das zweite Gleitelement 22 geführt ist, das am Deckelelement 13 angeordnet ist. Die in den Figuren 1 und 2 gezeigte erste Verbindungsachse 19 zur Verbindung des Hebelelementes 17 mit der Kamera 11 kann ferner zur Erhöhung der Festigkeit mit dem Anlenkelement 24 verbunden sein, wobei die Verbindung im zusätzlichen Verbindungspunkt 29 ausgeführt ist.

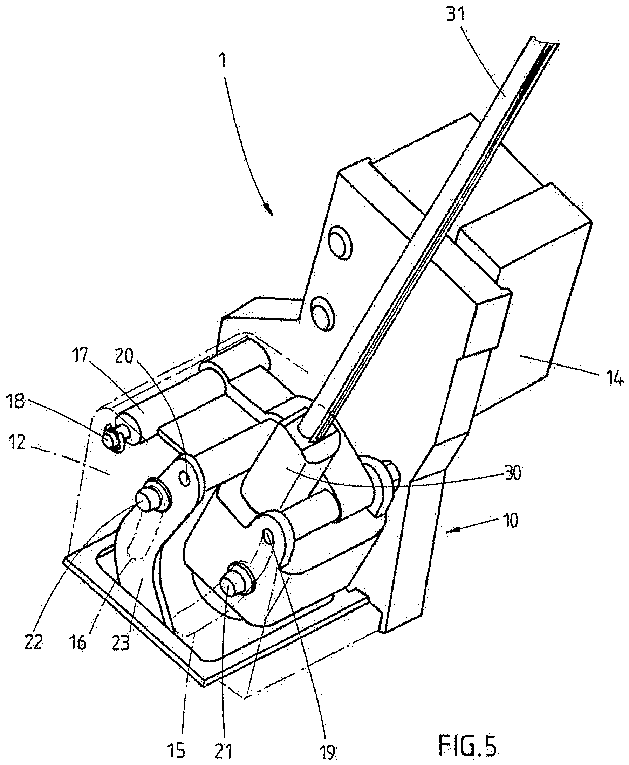

Figur 5 zeigt in einer perspektivischen Ansicht das Ausführungsbeispiel der Vorrichtung 1 mit der Kameraeinheit 10, wobei das Gehäuse 12 im Wesentlichen reduziert bzw. gestrichelt dargestellt ist. Folglich ist die geometrische Ausgestaltung des Hebelelementes 17 erkennbar, das um die Drehachse 18 drehbar gelagert ist. Die ersten und zweiten Verbindungsachsen 19 und 20 bilden weitere Drehachsen, über die die Kamera 11 und das Deckelelement 13 über das Führungselement 23 drehbar am Hebelelement 17 angeordnet sind.

Im vorderseitigen Bereich des teilweise dargestellten Gehäuses 12 sind die ersten und zweiten Führungskulissen 15 und 16 zur Führung sowohl des ersten Gleitelementes 21 als auch des zweiten Gleitelementes 22 angeordnet. Gemäß der Darstellung wird deutlich, dass die ersten und zweiten Gleitelemente 21 und 22 doppelt vorhanden sind, so dass auch die Führungskulissen 15 und 16 sowohl in der vorderseitig gezeigten Gehäusewandung als auch in der rückwärtigen Gehäusewandung vorhanden sind, an der die Antriebseinheit 14 angeordnet ist. Dadurch entsteht eine hohe Stabilität der Führung sowohl der Kamera 11 als auch des Deckelelementes 13 innerhalb des Gehäuses 12, so dass ein Verkippen oder Verkanten der Kamera 11 sowie des Deckelelementes 13 während der Bewegung relativ zum Gehäuse 12 vermieden wird. Die Antriebseinheit 14 ist rückseitig an der Kameraeinheit 10 angeordnet, wobei die Anordnung über einen Gehäuseteil 12 erfolgt, der zugleich die rückseitige Wandung des Gehäuses 12 bildet. Ferner zeigt das Hebelelement 17 eine Aussparung, durch die ein elektrisches Kontaktelement 30 zur Anbindung eines Kabels 31 zur Versorgung der Kamera 11 dient.

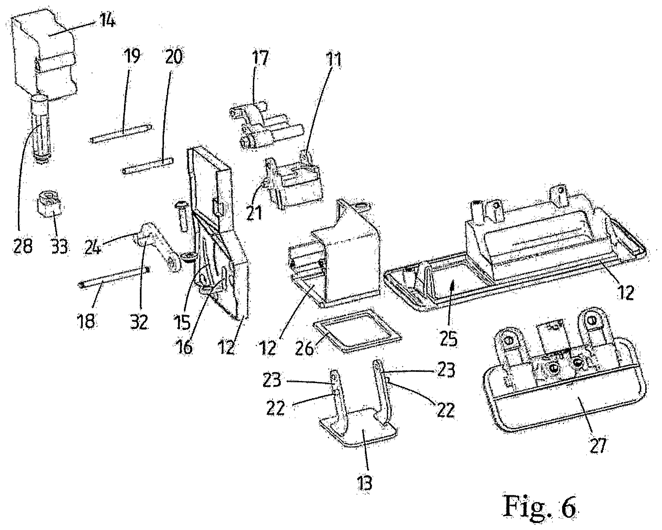

In Figur 6 ist die erfindungsgemäße Vorrichtung 1 in einer Explosionsdarstellung gezeigt. Das Gehäuse 12 der Kameraeinheit 10 ist mehrteilig ausgeführt und besitzt einen vorderseitigen Teil in Gestalt einer Platte sowie einen rückseitigen Teil in Form einer Schale. Am plattenartigen Gehäuseteil 12 kann die Antriebseinheit 14 mit dem Hubelement 28 angebracht werden. Rückseitig an die Kameraeinheit schließt sich eine Betätigungseinheit an, die ein Betätigungselement 27 zur Betätigung der Heckklappe eines Kraftfahrzeugs umfasst. Das bodenseitige, rahmenartige Gehäuseteil 12 umfasst die Öffnung 25, durch die die Kamera 11 hindurch führbar ist, wenn diese von der Rückzugstellung in die Bilderfassungsstellung überführt wird.

Die gezeigte Öffnung 25 kann durch das Deckelelement 13 verschlossen werden. Die gabelförmige Ausführung des Deckelelementes 13 mit zwei an diesem angeformten Führungselementen 23 ist ebenfalls gezeigt. An den Führungselementen 23 befinden sich die zweiten Gleitelemente 22, wobei ferner Durchgangsöffnungen am distalen Ende der Führungselemente 23 erkennbar sind, durch die die zweite Verbindungsachse 20 hindurch geführt werden kann. Die erste Verbindungsachse 19 kann durch entsprechende Öffnungen an der Kamera 11, die in Form von laschenartigen Anformungen vorhanden sind, hindurchgeführt werden. Sowohl die erste als auch die zweite Verbindungsachse 19 und 20 wird durch entsprechende Durchgangsöffnungen innerhalb des Hebelelementes 17 hindurch geführt, um am Hebelelement 17 sowohl die Kamera 11 als auch das Deckelelement 13 über die Führungselemente 23 anzuordnen. Über die Drehachse 18 wird schließlich das Hebelelement 16 am Gehäuse 12 drehbar befestigt.

Das außenseitig am Gehäuse vorhandene Anlenkelement 24 ist perspektivisch vor dem plattenartigen Teil des Gehäuses 12 gezeigt. Am Anlenkelement 24 ist ein Drehbolzen 32 gezeigt, an dem das Hubelement 28 über ein Verbindungsstück 33 befestigt werden kann. Schließlich wird das Anlenkelement 24 endseitig an der Drehachse 18 derart befestigt, dass vom Anlenkelement 24 ein Drehmoment auf die Drehachse 18 übertragen werden kann, um das Hebelelement 17 ebenfalls um die Drehachse 18 zu verschwenken.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen oder Verfahrensschritte, können sowohl für sich als auch in den verschiedensten Kombinationen erfindungswesentlich sein, insofern sie durch die Ansprüche gedeckt sind.

### Bezugszeichenliste

- 1: Vorrichtung
- 10: Kameraeinheit
- 11: Kamera
- 12: Gehäuse
- 13: Deckelement
- 14: Antriebseinheit, Drehmotor, Zentralverriegelungssteller
- 15: erste Führungskulisse
- 16: zweite Führungskulisse
- 17: Hebelelement
- 18: Drehachse
- 19: erste Verbindungsachse
- 20: zweite Verbindungsachse
- 21: erstes Gleitelement
- 22: zweites Gleitelement
- 23: Führungselement
- 24: Anlenkelement
- 25: Öffnung
- 26: Dichtelement
- 27: Betätigungselement
- 28: Hubelement
- 29: zusätzlicher Verbindungspunkt
- 30: elektrisches Kontaktelement
- 31: Kabel
- 32: Drehbolzen
- 33: Verbindungsstück

## Patentansprüche

1. Vorrichtung (1) mit einer Kameraeinheit (10), die zur Bilderfassung des Außenbereiches eines Kraftfahrzeugs dient, mit einer Kamera (11), die in einem Gehäuse (12) der Kameraeinheit (10) zwischen einer Rückzugstellung und einer Bilderfassungsstellung beweglich aufgenommen ist, und mit einem Deckelelement (13), das zwischen einer Schließstellung und einer Öffnungsstellung relativ zum Gehäuse (12) beweglich ist, wobei die Bewegung der Kamera (11) und die Bewegung des Deckelelementes (13) durch eine Antriebseinheit (14) erzeugbar ist, wobei wenigstens eine erste Führungskulisse (15) zur Führung der Bewegung der Kamera (11) zwischen der Rückzugstellung und der Bilderfassungsstellung vorgesehen ist, **dadurch gekennzeichnet, dass** wenigstens eine zweite Führungskulisse (16) zur Führung der Bewegung des Deckelelementes (13) zwischen der Schließstellung und der Öffnungsstellung vorgesehen ist, sodass eine Relativbewegung der Kamera (11) zum Deckelement (13) ermöglicht ist.

2. Vorrichtung (1) nach Anspruch 1,
**dadurch gekennzeichnet,**
**dass** wenigstens die erste Führungskulisse (15) und/oder wenigstens die zweite Führungskulisse (16) im Gehäuse (12) der Kameraeinheit (10) eingebracht ist, wobei vorzugsweise in zwei sich planparallel beabstandet gegenüberliegenden Gehäusewandungen jeweils eine erste Führungskulisse (15) und eine zweite Führungskulisse (16) vorhanden sind.

3. Vorrichtung (1) nach Anspruch 1 oder 2,
**dadurch gekennzeichnet,**
**dass** die Wirkverbindung zwischen der Antriebseinheit (14) und der Kamera (11) und die Wirkverbindung zwischen der Antriebseinheit (14) und dem Deckelelement (13) ein gemeinsames Hebelelement (17) umfassen.

4. Vorrichtung (1) nach Anspruch 3,
**dadurch gekennzeichnet,**
**dass** das Hebelelement (17) innerhalb des Gehäuses (12) in einer Drehachse (18) drehbar aufgenommen ist, wobei die Kamera (11) mit dem Hebelelement (17) in einer ersten Verbindungsachse (19) vorzugsweise gelenkig verbunden ist und wobei das Deckelelement (13) mit dem Hebelelement (17) in einer zweiten Verbindungsachse (20) vorzugsweise gelenkig verbunden ist.

5. Vorrichtung (1) nach Anspruch 4,
**dadurch gekennzeichnet,**
**dass** der Abstand zwischen der ersten Verbindungsachse (19) und der Drehachse (18) größer ist als der Abstand zwischen der zweiten Verbindungsachse (20) und der Drehachse (18).

6. Vorrichtung (1) nach einem der Ansprüche 4 oder 5,
**dadurch gekennzeichnet,**
**dass** an der Kamera (11) wenigstens ein erstes Gleitelement (21) angeordnet ist, das innerhalb der ersten Führungskulisse (15) geführt ist und zur Führung der Kamera (11) dient, sodass die Lage der Kamera (11) durch die Position des ersten Gleitelementes (21) in der ersten Führungskulisse (15) und durch die Position der ersten Verbindungsachse (19) bestimmt ist.

7. Vorrichtung (1) nach einem der Ansprüche 4 bis 6,
**dadurch gekennzeichnet,**
**dass** am Deckelelement (13) wenigstens ein zweites Gleitelement (22) angeordnet ist, das innerhalb der zweiten Führungskulisse (16) geführt ist und zur Führung des Deckelelementes (13) dient, sodass die Lage des Deckelelementes (13) durch die Position des zweiten Gleitelementes (22) in der zweiten Führungskulisse (16) und durch die Position der zweiten Verbindungsachse (20) bestimmt ist.

8. Vorrichtung (1) nach Anspruch 7,
**dadurch gekennzeichnet,**
**dass** das Deckelelement (13) wenigstens ein Führungselement (23) aufweist, an dem das zweite Gleitelement (22) angeordnet ist, wobei sich das Führungselement (23) vorzugsweise etwa orthogonal aus einer Ebene des Deckelelementes (13) heraus erstreckt, die durch den Bereich des Deckelelementes (13) gebildet ist, der gegen das Gehäuse (12) verschließend zur Anlage bringbar ist.

9. Vorrichtung (1) nach einem der Ansprüche 3 bis 8,
**dadurch gekennzeichnet,**
**dass** ein Anlenkelement (24) außenseitig am Gehäuse (12) angeordnet ist und in der Drehachse (18) drehübertragend mit dem Hebelelement (17) verbunden ist, derart, dass bei einem Anlenken des Anlenkelementes (24) durch die Antriebseinheit (14) eine Drehung des Hebelelementes (17) um die Drehachse (18) erzeugbar ist.

10. Vorrichtung (1) nach einem der vorgenannten Ansprüche,
**dadurch gekennzeichnet,**
**dass** das Gehäuse (12) eine Öffnung (25) aufweist, aus der die Kamera (11) in der Bilderfassungsstellung aus dem Gehäuse (12) wenigstens teilweise herausfahrbar ist und gegen die das Deckelelement (13) in der Schließstellung dichtend zu Anlage bringbar ist, wobei insbesondere zwischen der Öffnung (25) und dem Deckelement (13) ein Dichtelement (26) angeordnet ist.

11. Vorrichtung (1) nach einem der Ansprüche 3 bis 11,
**dadurch gekennzeichnet,**
**dass** die Antriebseinheit (14) als elektromechanische Antriebseinheit (14) mit einer Selbsthemmung ausgeführt ist, derart, dass eine Bewegung des Hebelelementes (17) ausschließlich durch einen Betrieb der Antriebseinheit (14) ermöglich ist.

12. Vorrichtung (1) nach einem der vorgenannten Ansprüche,
**dadurch gekennzeichnet,**
**dass** wenigstens eine der Führungskulissen (15, 16) derart ausgestaltet ist, dass eine Bewegung der Kamera (11) und/oder des Deckelelementes (13) ausschließlich durch eine Bewegung des Hebelelementes (17) ermöglich ist, um eine Selbsthemmung der Bewegung der Kamera (11) und/oder des Deckelelementes (13) zu schaffen.

13. Vorrichtung (1) nach einem der vorgenannten Ansprüche,
**dadurch gekennzeichnet,**
**dass** die Antriebseinheit (14) als ein Drehmotor (14) und/oder als ein Zentralverriegelungssteller (14) ausgeführt ist, wobei die als Zentralverriegelungssteller (14) ausgeführte Antriebseinheit (14) vorzugsweise auch zur Betätigung einer Zentralverriegelung des Kraftfahrzeugs ausgeführt ist.

14. Vorrichtung (1) nach einem der vorgenannten Ansprüche,
**dadurch gekennzeichnet,**
**dass** die Vorrichtung (1) eine Betätigungseinheit zur Öffnungs- und Schließbetätigung einer Klappe am Kraftfahrzeug umfasst, wobei die Betätigungseinheit wenigstens ein manuell bedienbares Betätigungselement (27) aufweist.

15. Vorrichtung (1) nach Anspruch 14,
**dadurch gekennzeichnet, dass** das Deckelelement (13) derart ausgeführt ist, dass dieses in der Schließstellung das Betätigungselement (27) in Richtung zur Außenseite des Kraftfahrzeugs abdeckt.

## Claims

1. A device (1) with a camera unit (10), which is used for image acquisition of the outside area of a motor vehicle, with a camera (11) which is accommodated in a housing (12) of the camera unit (10) so as to be movable between a retracted position and an image capturing position, and with a cover element (13) which is movable relative to the housing (12) between a closed position and an open position, wherein the movement of the camera (11) and the movement of the cover element (13) is generated by a drive unit (14), wherein at least one first guide slot (15) is provided for guiding the movement of the camera (11) between the retracted position and the image capturing position, **characterized in that** at least one second guide slot (16) is provided for guiding the movement of the cover element (13) between the closed position and the open position, so that a movement of the camera (11) relative to the cover element (13) is made possible.

2. The device (1) according to claim 1,
**characterized in**
**that** at least the first guide slot (15) and/or at least the second guide slot (16) is/are inserted in the housing (12) of the camera unit (10), wherein a first guide slot (15) and a second guide track (16) are preferably each provided in two housing walls which are in plane-parallel alignment opposite and at a distance from one another.

3. The device (1) according to claim 1 or 2,
**characterized in**
**that** the operative connection between the drive unit (14) and the camera (11) and the operative connection between the drive unit (14) and the cover element (13) comprise a common lever member (17).

4. The device (1) according to claim 3,
**characterized in**
**that** the lever element (17) is accommodated inside the housing (12) so as to be rotatable in an axis of rotation (18), wherein the camera (11) is connected preferably in articulated manner to the lever element (17) in a first connecting axle (19) and wherein the cover element (13) is connected preferably in articulated manner to the lever element (17) in a second connecting axle (20).

5. The device (1) according to claim 4,
**characterized in**
**that** the distance between the first connecting axle (19) and the axis of rotation (18) is greater than the distance between the second connecting axle (20) and the axis of rotation (18).

6. The device (1) according to one of claims 4 or 5,
**characterized in**
**that** at least one first sliding member (21) is arranged on the camera (11), and is guided in the first guide slot (15) and serves to guide the camera (11) so that the position of the camera (11) is determined by the position of the first sliding member (21) in the first guide slot (15) and by the position of the first connecting axle (19).

7. The device (1) according to any one of claims 4 to 6,
**characterized in**
**that** at least one second sliding member (22) is arranged on the cover element (13), and is guided in the second guide slot (16) and serves to guide the cover element (13) so that the position of the cover element (13) is determined by the position of the second sliding member (22) in the second guide slot (16) and by the position of the second connecting axle (20).

8. The device (1) according to claim 7,
**characterized in**
**that** the cover element (13) has at least one guide element (23) on which the second sliding member (22) is arranged, wherein the guide element (23) preferably extends substantially orthogonally out of a plane of the cover element (13) which is formed by the region of the cover element (13) that can be brought to bear on in sealing manner on the housing (12).

9. The device (1) according to any one of claims 3 to 8,
**characterized in**
**that** an articulated coupling element (24) is arranged on the outside of the housing (12) and is connected to the lever element (17) so as to transmit rotation in the axis of rotation (18) in such manner that when the articulated coupling element (24) is coupled a rotation of the lever element (17) about the axis of rotation (18) can be caused by the drive unit (14).

10. The device (1) according to any one of the preceding claims,
**characterized in**
**that** the housing (12) has an opening (25) through which the camera (11) in the image capturing position can be at least partly extended out of the housing (12), and on which the cover element (13) can be brought to bear in sealing manner in the closed position, wherein a sealing element (26) is arranged in particular between the opening (25) and the cover element (13).

11. The device (1) according to one of claims 3 to 11,
**characterized in**
**that** the drive unit (14) is embodied as an electromechanical drive unit (14) with a self-locking effect, such that a movement of the lever element (17) is only enabled by an operation of the drive unit (14).

12. The device (1) according to one of the preceding claims,
**characterized in**
**that** at least one of the guide slots (15, 16) is designed such that a movement of the camera (11) and/or of the cover element (13) is is only enabled by a movement of the the lever element (17), thus creating a self-locking effect of the movement of the camera (11) and/or of the cover element (13).

13. The device (1) according to any one of the preceding claims,
**characterized in**
**that** the drive unit (14) is designed as a rotary motor (14) and/or as a central locking actuator (14), wherein the drive unit (14) designed as a central locking actuator (14) is preferably also designed to actuate a central locking system of the motor vehicle.

14. The device (1) according to any one of the preceding claims,
**characterized in**
**that** the device (1) comprises an operating unit for opening and closing operation of a flap on the motor vehicle, wherein the operating unit has at least one manually operable operating element (27).

15. The device (1) according to claim 14,
**characterized in**
**that** the cover element (13) is designed such that in the closed position it covers the operating element (27) in the direction of the outside of the motor vehicle.

## Revendications

1. Dispositif (1) avec une unité de caméra (10) qui sert à la saisie d'images de la zone extérieure d'un véhicule automobile, avec une caméra (11) qui est logée dans un boîtier (12) de l'unité de caméra (10) mobile entre une position de recul et une position de saisie d'images et avec un élément de recouvrement (13), qui est mobile entre une position de fermeture et une position d'ouverture par rapport au boîtier (12), le mouvement de la caméra (11) et le mouvement de l'élément de recouvrement (13) pouvant être produit par une unité d'entraînement (14), au moins une première coulisse de guidage (15) étant prévue pour guider le mouvement de la caméra (11) entre la position de recul et la position de saisie d'images, **caractérisé en ce qu'**au moins une deuxième coulisse de guidage (16) est prévue pour guider le mouvement de l'élément de recouvrement (13) entre la position de fermeture et la position d'ouverture de manière à permettre un mouvement relatif de la caméra (11) par rapport à l'élément de recouvrement (13).

2. Dispositif (1) selon la revendication 1,
**caractérisé en ce**
**qu'**au moins la première coulisse de guidage (15) et/ou au moins la deuxième coulisse de guidage (16) est logée dans le boîtier (12) de l'unité de caméra (10), une première coulisse de guidage (15) et une deuxième coulisse de guidage (16) étant respectivement présentes de préférence dans deux parois de boîtier se faisant face à distance de façon planimétrique.

3. Dispositif (1) selon la revendication 1 ou 2,
**caractérisé en ce**
**que** la liaison fonctionnelle entre l'unité d'entraînement (14) et la caméra (11) et la liaison fonctionnelle entre l'unité d'entraînement (14) et l'élément de recouvrement (13) comprennent un élément de levier commun (17).

4. Dispositif (1) selon la revendication 3,
**caractérisé en ce**
**que** l'élément de levier (17) est logé pouvant tourner dans un axe de rotation (18) à l'intérieur du boîtier (12), la caméra (11) étant reliée à l'élément de levier (17) dans un premier axe de liaison (19) de préférence de façon articulée et l'élément de recouvrement (13) étant relié à l'élément de levier (17) dans un deuxième axe de liaison (20) de préférence de façon articulée.

5. Dispositif (1) selon la revendication 4,
**caractérisé en ce**
**que** la distance entre le premier axe de liaison (19) et l'axe de rotation (18) est supérieure à la distance entre le deuxième axe de liaison (20) et l'axe de rotation (18).

6. Dispositif (1) selon l'une quelconque des revendications 4 ou 5,
**caractérisé en ce**
**que** sur la caméra (11) est disposé au moins un premier élément coulissant (21) qui est guidé à l'intérieur de la première coulisse de guidage (15) et sert à guider la caméra (11) de telle sorte que la position de la caméra (11) est déterminée par la position du premier élément coulissant (21) dans la première coulisse de guidage (15) et par la position du premier axe de liaison (19).

7. Dispositif (1) selon l'une quelconque des revendications 4 à 6,
**caractérisé en ce**
**que** sur l'élément de recouvrement (13) est disposé au moins un deuxième élément coulissant (22), qui est guidé à l'intérieur de la deuxième coulisse de guidage (16) et sert au guidage de l'élément de recouvrement (13) de telle sorte que la position de l'élément de recouvrement (13) est déterminée par la position du deuxième élément coulissant (22) dans la deuxième coulisse de guidage (16) et par la position du deuxième axe de liaison (20).

8. Dispositif (1) selon la revendication 7,
**caractérisé en ce**
**que** l'élément de recouvrement (13) comporte au moins un élément de guidage (23) sur lequel est disposé le deuxième élément coulissant (22), l'élément de guidage (23) s'étendant de préférence légèrement orthogonalement en dehors d'un plan de l'élément de recouvrement (13), qui est formé par la zone de l'élément de recouvrement (13) qui peut être mise en appui de fermeture contre le boîtier (12).

9. Dispositif (1) selon l'une quelconque des revendications 3 à 8,
**caractérisé en ce**
**qu'**un élément articulé (24) est disposé côté extérieur sur le boîtier (12) et est relié dans l'axe de rotation (18) à l'élément de levier (17) en transmettant la rotation de telle manière que lors d'une articulation de l'élément articulé (24) par l'unité d'entraînement (14) une rotation de l'élément de levier (17) peut être produite autour de l'axe de rotation (18).

10. Dispositif (1) selon l'une quelconque des revendications précédentes,
**caractérisé en ce**
**que** le boîtier (12) comporte une ouverture (25) hors de laquelle la caméra (11) peut être au moins en partie sortie du boîtier (12) dans la position de saisie d'images et contre laquelle l'élément de recouvrement (13) peut être mis en appui de façon hermétique dans la position de fermeture, un élément d'étanchéité (26) étant disposé en particulier entre l'ouverture (25) et l'élément de recouvrement (13).

11. Dispositif (1) selon l'une quelconque des revendications 3 à 11,
**caractérisé en ce**
**que** l'unité d'entraînement (14) est exécutée comme une unité d'entraînement électromécanique (14) avec un blocage automatique de telle manière qu'un mouvement de l'élément de levier (17) n'est possible que par un fonctionnement de l'unité d'entraînement (14).

12. Dispositif (1) selon l'une quelconque des revendications précédentes,
**caractérisé en ce**
**qu'**au moins une des coulisses de guidage (15, 16) est conçue de telle manière qu'un mouvement de la caméra (11) et/ou de l'élément de recouvrement (13) n'est permis que par un mouvement de l'élément de levier (17) pour créer un blocage automatique du mouvement de la caméra (11) et/ou de l'élément de recouvrement (13).

13. Dispositif (1) selon l'une quelconque des revendications précédentes,
**caractérisé en ce**
**que** l'unité d'entraînement (14) est exécutée en tant que moteur rotatif (14) et/ou en tant que positionneur de verrouillage central (14), l'unité d'entraînement (14) exécutée comme positionneur de verrouillage central (14) étant de préférence exécutée également pour actionner un verrouillage central du véhicule automobile.

14. Dispositif (1) selon l'une quelconque des revendications précédentes,
**caractérisé en ce**
**que** le dispositif (1) comprend une unité de manoeuvre pour la commande d'ouverture et de fermeture d'un volet sur le véhicule automobile, l'unité de manoeuvre comportant au moins un élément de manoeuvre (27) pouvant être actionné à la main.

15. Dispositif (1) selon la revendication 14,
**caractérisé en ce**
**que** l'élément de recouvrement (13) est exécuté de telle manière que celui-ci couvre dans la position de fermeture l'élément de manoeuvre (27) en direction de la face extérieure du véhicule automobile.
